# EUROPÄISCHE PATENTANMELDUNG

(11) **EP 2 645 373 A1**
(43) Veröffentlichungstag der Anmeldung: **02.10.2013**
(21) Anmeldenummer: 12161149.5
(22) Anmeldetag: 26.03.2012
(51) Int. Cl.: H01B 3/44, H01B 1/24, H02K 3/30, H02K 3/40

(54) **Material für Isolationssystem, Isolationssystem, Außenglimmschutz und eine elektrische Maschine**

(71) Anmelder: Siemens Aktiengesellschaft, 80333 München (DE)
(72) Erfinder: Brockschmidt, Mario, 45131 Essen (DE); Gröppel, Peter, 91052 Erlangen (DE); Pohlmann, Friedhelm, 45355 Essen (DE); Rohr, Claus, 68219 Mannheim (DE); Röding, Roland, 99755 Ellrich (DE)

(57) **Zusammenfassung**

Durch die Verwendung eines elektrisch leitfähigen PTFE-Gewebes werden Hochspannungsisolationssysteme vereinfacht und können dünner ausgeführt werden, wobei auch die thermische Leitfähigkeit verbessert wird.

## Beschreibung

Die Erfindung betrifft ein Material für Isolationssystem, ein Isolationssystem, ein Außenglimmschutz und eine elektrische Maschine.

Eine Potentialsteuerung ermöglicht in rotierenden Maschinen, wie z.B. Generatoren oder Hochspannungsmotoren , die Minimierung elektrischer Spannungen (Potentialdifferenzen) wodurch das Auftreten von Teil- und/oder Glimmentladungen reduziert oder ganz vermieden werden können.

In rotierenden elektrischen Maschinen ist die Zuverlässigkeit des Isoliersystems maßgeblich für deren Betriebssicherheit verantwortlich. Das Isoliersystem hat die Aufgabe, elektrische Leiter (Drähte, Spulen, Stäbe) dauerhaft gegeneinander und gegen das Ständerblechpaket oder die Umgebung zu isolieren. Die Außenpotenzialsteuerung hat die Aufgabe, einen elektrischen Kontakt zwischen dem auf Erdpotenzial liegenden Ständerblechpaket und der Außenseite der Hauptisolierung zu realisieren. Dadurch wird sichergestellt, dass keine Teilentladungen in Hohlräumen im Bereich der Grenzschicht von Isolierung und Blechpaket auftreten.

Hierbei ist zu unterscheiden
● Außenglimmschutz (AGS) für Generatorwicklungsstäbe, die entsprechend Einzelstabfertigung hergestellt wurden (AGS-E)
● Außenglimmschutz (AGS) für Generatorwicklungsstäbe, die mittels GVPI-Prozess hergestellt wurden (AGS-G).

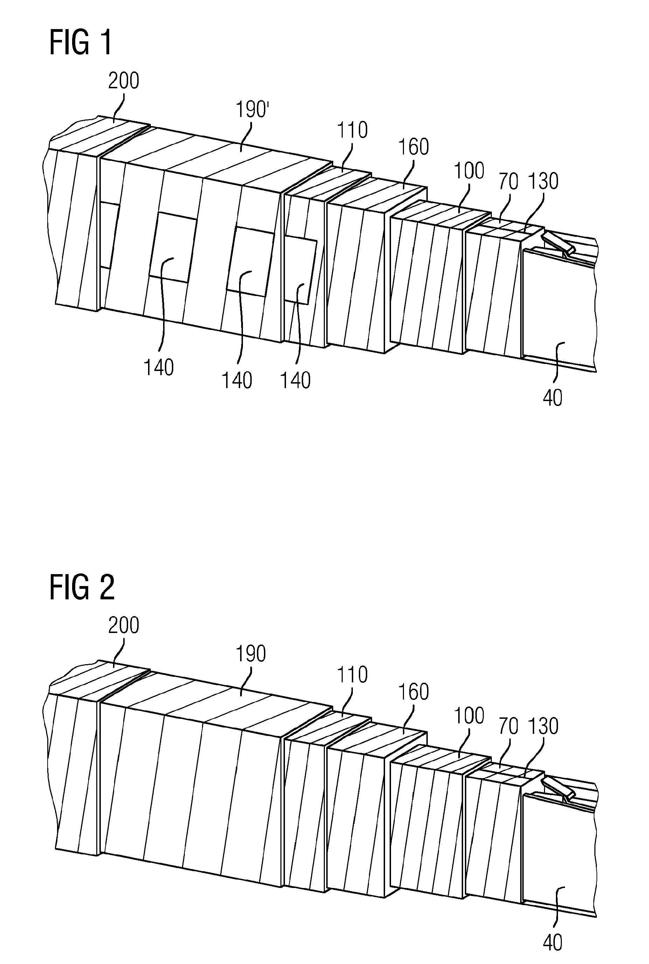

Bei ganzgetränkten Ständerwicklungen (Global Vacuum Pressure Impregnation GVPI) wird das gesamte Blechpaket mit einer vollständig eingebauten Wicklung gemeinsam getränkt und ausgehärtet. Dadurch ist die Verklebung der Wicklung in den Nuten des Blechpaketes so fest, dass es durch die die unterschiedlichen Ausdehnungskoeffizienten von Kupfer, Eisen und Isolierung zu hohen thermomechanischen Spannungen zwischen Kupfer, Isolierung und Eisen kommt, die nach einer gewissen Anzahl von Wärmespielen (Starts und Stopps des Generators) zum Aufreißen der Grenzflächen führen können. Um zu verhindern, dass die Spalte einer elektrischen Potentialdifferenz unter liegen und die dort zündenden Teilentladungen die Isolierung zerstören, wird eine Außenpotentialsteuerung (outer corona protection, OCP) eingesetzt, die in Figur 1 als doppellagiger Außenglimmschutz, wie er zur Potentialsteuerung mittels G-VPI prozessierter Maschinen eingesetzt wird, dargestellt ist. Über den stromführenden Roebelstab aus Kupferteilleitern 40 wird ein isolierender Grundwickel 70 aus Feinglimmerband aufgebracht, der die Kantenradien der dünnen Kupferteilleiter 40 glättet und vergrößert.

Hierüber wird ein erstes graphithaltiges Leitvliesband 100 gewickelt, das über einen Kontaktstreifen 130 an nur einer Stelle mit dem Hochspannungspotential des Kupferteilleiters 40 verbunden ist.

Erst darauf wird die Hauptisolierung 160 aus Feinglimmerglas gewickelt. Anstelle der Kupferteilleiter bildet nun das erste Leitvliesband 100 die Hochspannungselektrode. Es ist dauerhaft mit der Hauptisolierung verklebt.

Auf der Hauptisolierung 160 folgt der innere Außenglimmschutzwickel 110 aus einem Material nach dem Stand der Technik (leitfähiges, flexibles Band, insbesondere von der Firma Krempel), ein äußerstes Trennband 190' und ein äußerer Außenglimmschutzwickel 200. Ein Außenglimmschutzband 140, das im äußersten Trennband 190' verwoben ist, verbindet inneren 110 und äußeren 200 Außenglimmschutzwickel.

Die beim An- und Abfahren des Generators entstehenden thermomechanischen Spannungen zwischen dem Kupferleiterverband und der Isolierung können nach gewisser Betriebszeit zu lokalen Ablösungen der Isolierhülse vom Leiter führen, ohne dass in den entstehenden Spalten die gefürchteten Teilentladungen zünden. Der Bereich der Delamination ist potentialfrei, weil das Hochspannungspotential auf das an der Hauptisolierung fest backende Leitvlies übertragen wurde. Dieses IPS-Design an der hochbeanspruchten inneren Grenzfläche zwischen Leiter und Isolierung erlaubt einen Jahrzehnte langen Spitzenlastbetrieb von Turbogeneratoren ohne eine merkliche Teilentladungsalterung

Es ist daher Aufgabe der Erfindung, o.g. Probleme zu lösen.

Die Aufgabe wird gelöst durch ein Isolationsmaterial nach Anspruch 1, Isolationssystem gemäß Anspruch 17, ein Außenglimmschutz nach Anspruch 20 und eine elektrische Maschine gemäß Anspruch 21.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine Außenpotentialsteuerung eines Generatorwicklungsstabs nach dem Stand der Technik,
- Figur 2: eine erfindungsgemäße Außenpotentialsteuerung und
- Figur 3: einen Generator.

Die Figuren und die Beschreibung stellen nur Ausführungsbeispiele der Erfindung dar.

Die Erfindung besteht darin, dass man hydrophobes Material, insbesondere PTFE (Teflon) als Isolation, insbesondere für ein solches Hochspannungsisolationssystem verwendet, wobei das Isolationssystem lagenweise elektrisch leitfähig ausgestaltet wird.

Das Hochspannungsisolationssystem kann ein einfaches Systems oder ein komplexeres Systeme wie in Figur 1 sein.

Die Erfindung wird nur anhand von PTFE als ein Beispiel für ein hydrophobes Material erläutert.

Vorzugsweise wird schon das hydrophobe Material oder PTFE elektrisch leitfähig ausgestaltet. Das PTFE ist dann ein Kompositmaterial.

Dies erfolgt vorzugsweise bei der Herstellung des Materials insbesondere mittels Einmischung von elektrisch leitfähigem Material, von Graphit z.B. mittels Extrusion bei der Herstellung, wobei dann vorzugsweise Fasern hergestellt werden.

Es ist aber auch eine nachträglich elektrisch leitfähige Beschichtung eines Gewebes, einer Faser, eines Geleges, einer Membran oder einer Folie möglich.

Das Gewebe wird vorzugsweise aus Fasern gebildet, die das elektrisch leitfähige Isolationsmaterial, insbesondere PTFE aufweisen.

Dieses Gewebe ist vorzugsweise in Bandform vorhanden und wird für die Anwendung auf die zu isolierende Fläche gewickelt (siehe Figur 2).

Ebenso kann ein perforiertes Band (in Gewebeform o.ä.), eine perforierte Membran oder ein perforiertes Gelege (Gelege wie aus Textiltechnik bekannt) verwendet werden, d.h. es werden in das Band, in die Gewebe, in die Membran (die schon porös ist) oder in das Gelege Durchgangslöcher eingebracht.

Vorzugsweise weist also das Hochspannungsisolationssystem im Außenglimmschutz Fasern oder ein Gewebe aus PTFE auf, wobei zur Erzielung der elektrischen Leitfähigkeit auch zwischen den das gewebebildenden Strukturen vorzugsweise ein elektrisch leitfähiges Material, vorzugsweise Graphit vorhanden ist.

Das AGS im Hochspannungsisolationssystem in Figur 2 weist vorzugsweise ein Gewebe aus PTFE auf, wobei dies so konstruiert ist, dass das Gewebe Poren aufweist, die wie oben nach dem beschriebenen Verfahren infiltriert werden können.

Der prinzipielle Aufbau und Funktionsweise des aktuellen AGS-Systems gemäß Figur 1 soll dabei unverändert bestehen bleiben, mit Ausnahme des Wegfalls des Außenglimmschutzbands 140 und Austausch des Spaltglimmers durch das erfindungsgemäße PTFE-haltige Material. Man kann vorzugsweise außerdem auf den Außenglimmschutzwickel 200 in Figur 2 verzichten.

Dies ergibt folgende Vorteile:
● Gute Durchimprägnierbarkeit, da es sich um ein poröses Gewebe handelt und somit vor der Aushärtung appliziert werden kann.
● Unveränderter Widerstand vor und nach der Imprägnierung, da die Leitfähigkeit von Fasern herrührt und nicht von Partikeln wie beim AGS-Band. (Diese weisen aufgrund der nach der Imprägnierung die Partikel umhüllende Kunststoffmatrix einen anderen Widerstandswert im Vergleich zum Anfangswert auf).

Die Ziele für den erfindungsgemäßen AGS-G sind:
● vereinfachte Applikation/Kostenreduktion
● reduzierte Schichtdicke des Doppel-AGS durch dünnere Alternative

Der Ansatz für den erfindungsgemäßen AGS-G lautet:
● Reduktion der Schichtdicke durch Einsatz einer Trennschicht, die eine definierte mechanische Entkopplung realisiert ohne, dass es zur Veränderung des elektrischen Widerstandes kommt. Dies soll durch den Ersatz der doppelten Lage Spaltglimmer durch hydrophobe Gewebetypen realisiert werden. Dies kann insbesondere ein Teflongewebe sein. Der Aufbau erfolgt in der Weise:

Eine Verbesserung ergibt sich erfindungsgemäß durch den Einsatz von elektrisch leitfähigen Gewebe 190 aus PTFE, da dies die "Einflechtung" des Außenglimmschutzbands 140 (Fig. 1) unnötig macht. Dies eine Reduktion der Schichtdicke und des Fertigungsaufwandes ermöglicht würde (Fig. 2).

Der erfindungsgemäße Aufbau einer innovativen Außenpotenzialsteuerung für den Einsatz im GVPI-Prozess ermöglicht ein Isolierungssystem, das in den Eigenschaften dem aktuellen Stand der Technik entspricht, aber die Vorzüge aufweist:
● Feststellung der TE-Freiheit nach der Aushärtung
● vergleichbare Verlustfaktoren nach Durchführung von Temperaturzyklentests zur beschleunigten thermomechanischen Belastung
● vergleichbare elektrische Dauerbeständigkeiten unter Betriebsspannungsbelastung und bei erhöhter Spannungsbelastung
● vergleichbare elektrische Dauerbeständigkeiten unter Betriebsspannungsbelastung und bei erhöhter Spannungsbelastung nach Auslagerung bei unterschiedlichen Temperaturzyklen.

Diese Untersuchungen wurden an Generatorwicklungsstäben mit folgendem Design durchgeführt:
● Aluminiumprofile mit einer Länge von ca. 1,5 m und Abmessungen von 1cm x 5cm
● Lagenzahl an Glimmer 8 + 1 Lage IPS für eine Nennspannung von 13,8kV
● Anzahl an Generatorwicklungsstäben pro Kollektiv: 6.

Dabei wurde eine Reduktion der Schichtdicke des aktuellen AGS von ca. 450µm auf einen Wert von ca. 100µm ermöglicht.

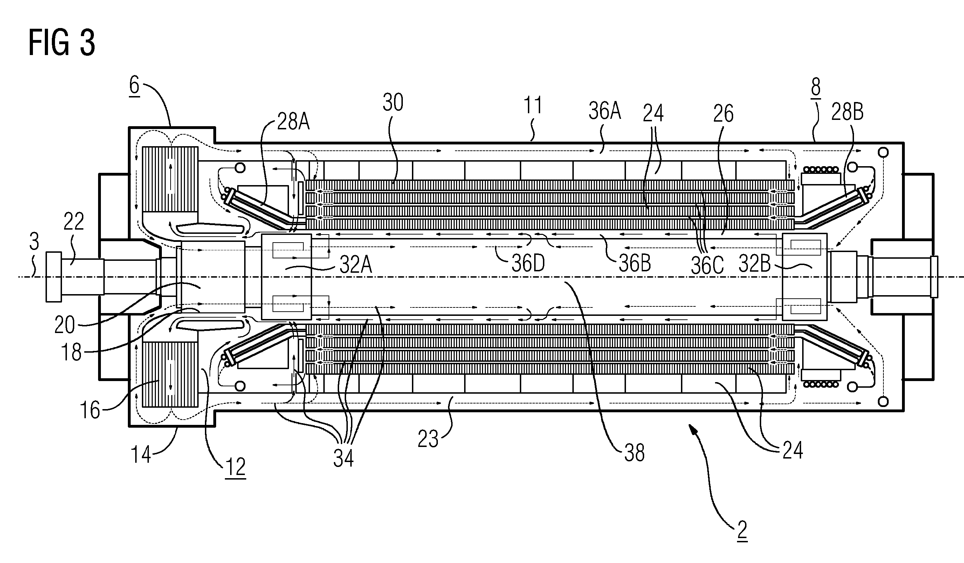

Die Figur 3 zeigt beispielhaft einen Generator als elektrische Maschine.

Gemäß Figur 3 erstreckt sich eine
Rotationsmaschinenanordnung, insbesondere eine Generatoranordnung 2 entlang einer Längsachse 3 von einem turbinenseitigen Endbereich 6 zu einem erregerseitigen Endbereich 8. Die Generatoranordnung 2 weist ein Gehäuse 10 auf. Im turbinenseitigen Endbereich 6 ist eine Kühlvorrichtung 12 angeordnet. Und zwar sind in einem Kühlerkopf 14, der ein Teil des Gehäuses 11 ist, zwei Kühler 16 und ein Verdichter in Form eines Gebläses 18 mit einer Gebläsenabe 20 angeordnet. Die Gebläsenabe 20 sitzt auf einem Läufer 22, der sich entlang der Längsachse 3 durch die Generatoranordnung 2 erstreckt. Im Anschluss an die Kühlvorrichtung 12 in Richtung der Längsachse 3 ist der eigentliche Generatorbereich 23 angeordnet. In diesem Bereich ist der Läufer 22 von einem Ständer 24 unter Bildung eines Luftspalts 26 umgeben. Der Ständer 24 weist eine Ständerwicklung mit einem turbinenseitigen Ständerwickelkopf 28A und mit einem erregerseitigen Ständerwickelkopf 28B auf. Zwischen den beiden Ständerwickelköpfen 28A, 28B ist ein sogenanntes Blechpaket 30 angeordnet. Analog zum Ständer 24 weist der Läufer 22 einen turbinenseitigen Läuferwickelkopf 32A und einen erregerseitigen Läuferwickelkopf 32B auf.

Aufgrund der bei Turbogeneratoren üblichen hohen Leistungsdichte ist eine Kühlung der Generatoranordnung 2 im Generatorbereich 23 notwendig. Einen besonders hohen Kühlbedarf haben hierbei die Ständerwickelköpfe 28A, 28B, sowie die Läuferwickelköpfe 32A, 32B. Zur Kühlung des Generatorbereichs 23 weist dieses eine Kühlsystem 34 auf, welches von der Kühlvorrichtung 12 mit Kühlgas versorgt wird. Das Kühlsystem 34 hat eine Anzahl von Kühlgaskanälen 36A, D, 48, über die das Kühlgas in einem Kreislauf geführt wird. Ein erster Kühlgaskanal 36A erstreckt sich hierbei in axialer Richtung und ist zwischen dem Ständer 24 und dem Gehäuse 10 angeordnet. Ein zweiter Kühlgaskanal 36B ist vom Luftspalt 26 gebildet. Weitere sich in axialer Richtung erstreckende Kühlgaskanäle 36C führen durch das Blechpaket 30. Zur Kühlung des Läufers 22 führt durch diesen ein Kühlgaskanal 36D. Die Kühlgasströmung im Generatorbereich 23 sowie in der Kühlvorrichtung 12 ist jeweils durch Pfeile angedeutet, wobei die gestrichelten Pfeile den Strömungsweg des kalten Kühlgases und die durchgezogenen Pfeile den Strömungsweg des erwärmten Kühlgases (Warmgas) angeben.

Zur Kühlung der Ständerwickelköpfe 28A, 28B teilt sich der von den Kühlern 16 kommende Kühlgas- Strom im turbinenseitigen Endbereich 6 auf. Der eine Teilstrom dient zur Kühlung des turbinenseitigen Ständerwickelkopfs 28A und der andere Teilstrom wird über den Kühlgaskanal 36A zum erregerseitigen Ständerwickelkopf 28B weitergeleitet und nochmals aufgeteilt. Der eine Teil dient zur Kühlung des Ständerwickelkopfs 28B und strömt von dort als Warmgas über den Luftspalt 26 wieder zurück. Der andere Teil wird durch die Kühlgaskanäle 36C des Blechpakets 30 geleitet und tritt im turbinenseitigen Endbereich 6 als Warmgas aus und wird den Kühlern 16 zugeführt. Zur Kühlung der Läuferwickelköpfe 32A, 32B wird Kühlgas in den Kühlgaskanal 36D des Läufers 22 sowohl vom turbinenseitigen Endbereich 6 als auch vom erregerseitigen Endbereich 8 eingeleitet. Ein Teilstrom des Kühlgases durchströmt die jeweiligen Läuferwickelköpfe 32A, 32B und wird anschließend in den Luftspalt 26 als Warmgas geleitet und den Kühlern 16 zugeführt. Der verbleibende Teilstrom wird im Kühlgaskanal 36D weiter durch den Läufer 22 hindurchgeführt, und zwar derart, dass das Kühlgas von den beiden Läuferwickelköpfen 32A, 32B aufeinander zuströmt und etwa im Mittenbereich 38 des Generatorbereichs 23 in den Luftspalt 26 geleitet wird.

## Patentansprüche

1. Elektrisch leitfähiges Isolationsmaterial,
das hydrophobes Material,
insbesondere PTFE,
aufweist,
insbesondere daraus besteht.

2. Isolationsmaterial nach Anspruch 1,
das elektrisch leitfähiges, hydrophobes Material, insbesondere elektrisch leitfähiges PTFE aufweist.

3. Isolationsmaterial nach einem oder beiden der Ansprüche 1 oder 2,
das Fasern aufweist.

4. Isolationsmaterial nach Anspruch 3,
bei dem die Fasern hydrophobes, elektrisch leitfähiges Material,
insbesondere elektrisch leitfähige PTFE-Fasern aufweisen,
ganz insbesondere daraus bestehen.

5. Isolationsmaterial nach einem oder mehreren der Ansprüche 1 bis 4,
das ein Gewebe,
insbesondere aus Fasern,
aufweist,
das zumindest teilweise,
insbesondere vollständig Fasern nach Anspruch 4 aufweist.

6. Isolationsmaterial nach einem oder mehreren der Ansprüche 1, 2, 3, 4 oder 5,
das ein Gewebe (5) aus hydrophobem, elektrisch leitfähigem Material,
insbesondere aus elektrisch leitfähigem PTFE aufweist.

7. Isolationsmaterial nach einem oder mehreren der Ansprüche 1 bis 5,
das eine Membran darstellt.

8. Isolationsmaterial nach einem oder mehreren der Ansprüche 1, 2 oder 3,
das ein Gelege darstellt.

9. Isolationsmaterial nach einem oder mehreren der vorherigen Ansprüche,
das ein Band bildet.

10. Isolationsmaterial nach einem oder mehreren der vorherigen Ansprüche,
das perforiert ist.

11. Isolationsmaterial nach einem oder mehreren der vorherigen Ansprüche,
das ein perforiertes Band aus elektrisch leitfähigem, hydrophoben Material,
insbesondere aus elektrisch leitfähigem PTFE,
aufweist.

12. Isolationsmaterial nach einem oder mehreren der vorhergehenden Ansprüche,
bei dem elektrisch leitfähiges Material in das hydrophobe Material,
insbesondere in PTFE,
eingemischt ist.

13. Isolationsmaterial nach einem oder mehreren der Ansprüche 3 bis 12,
bei dem elektrisch leitfähiges Material zwischen den Fasern, dem Gelege, der Membran oder der Gewebestruktur verteilt ist.

14. Isolationsmaterial nach einem oder mehreren der vorhergehenden Ansprüche,
bei dem das hydrophobe Material, das PFTE, die Faser, das Gewebe, die Membran das Gelege oder das Band mit einer elektrisch leitfähigen Schicht beschichtet sind.

15. Isolationsmaterial nach einem oder mehreren der Ansprüche 12, 13 oder 14,
bei dem das elektrisch leitfähige Material Graphit darstellt.

16. Isolationssystem nach Anspruch 17,
das Poren aufweist,
die insbesondere infiltrierbar sind.

17. Lagenweise elektrisch leitfähiges Isolationssystem, insbesondere Hochspannungssystem,
das hydrophobes Material,
insbesondere PTFE,
aufweist.

18. Isolationssystem nach Anspruch 17,
das in Bandform aufgewickelt ist.

19. Isolationssystem nach einem oder beiden der Ansprüche 17 oder 18,
bei dem das PTFE-haltige Material zwischen inneren Außenglimmschutzwickel (110) und äußeren Außenglimmschutzmaterial (200) angeordnet ist.

20. Außenglimmschutz,
aufweisend ein Isolationsmaterial oder ein Isolationssystem nach einem oder mehreren der vorherigen Ansprüche,
insbesondere bestehend daraus.

21. Elektrische Maschine mit einem Isolationsmaterial oder einem Isolationssystem nach einem oder mehreren der vorherigen Ansprüchen 1 bis 20,
insbesondere ein Generator.
